(19) Europäisches Patentamt

European Patent Office

Office européen des brevets

(11) **EP 4 078 166 B1**

(12) **FASCICULE DE BREVET EUROPEEN**

(45) Date de publication et mention
de la délivrance du brevet:
**05.08.2026 Bulletin 2026/32**

(21) Numéro de dépôt: **20824255.2**

(22) Date de dépôt: **16.12.2020**

(51) Classification Internationale des Brevets (IPC):
*G01N 29/04* *(2006.01)*   *G01N 29/06* *(2006.01)*
*G01N 29/14* *(2006.01)*   *G01N 29/22* *(2006.01)*
*G01N 29/24* *(2006.01)*   *G01N 29/265* *(2006.01)*
*G01N 29/50* *(2006.01)*   *G01N 29/46* *(2006.01)*

(52) Classification Coopérative des Brevets (CPC):
**G01N 29/045; G01N 29/043; G01N 29/046;
G01N 29/0672; G01N 29/069; G01N 29/14;
G01N 29/223; G01N 29/2412; G01N 29/2475;
G01N 29/265; G01N 29/46; G01N 29/50;**
G01N 2291/0231; G01N 2291/0234;
G01N 2291/0258;                          (Cont.)

(86) Numéro de dépôt international:
**PCT/EP2020/086460**

(87) Numéro de publication internationale:
**WO 2021/122774 (24.06.2021 Gazette 2021/25)**

(54) **MESURE PASSIVE D'ONDES ACOUSTO-ELASTIQUES**

PASSIVE MESSUNG VON AKUSTO-ELASTISCHEN WELLEN

PASSIVE MEASUREMENT OF ACOUSTO-ELASTIC WAVES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.12.2019 FR 1915243**

(43) Date de publication de la demande:
**26.10.2022 Bulletin 2022/43**

(73) Titulaire: **Commissariat à l'Energie Atomique et
aux Energies
Alternatives
75015 Paris (FR)**

(72) Inventeurs:
• **DRUET, Tom
94270 LE KREMLIN BICETRE (FR)**
• **MESNIL, Olivier
91400 ORSAY (FR)**
• **CHAPUIS, Bastien
73100 TRESSERCE (FR)**

(74) Mandataire: **Atout PI Laplace
Immeuble Up On
25 Boulevard Romain Rolland
CS 40072
75685 Paris Cedex 14 (FR)**

(56) Documents cités:
WO-A1-2015/082292        FR-A1- 3 073 289
US-A- 5 456 113          US-A1- 2006 027 022
US-A1- 2009 139 337      US-A1- 2010 199 767

• **WON-BAE NA ET AL: "Inspection of interfaces
between corroded steel bars and concrete using
the combination of a piezoelectric zirconatetitanate transducer and an electromagnetic
acoustic transducer", EXPERIMENTAL
MECHANICS., vol. 43, no. 1, 1 March 2003
(2003-03-01), US, pages 24 - 31, XP055739813,
ISSN: 0014-4851, DOI: 10.1007/BF02410480**

(52) Classification Coopérative des Brevets (CPC):
(Cont.)G01N 2291/106; G01N 2291/2634;
G01N 2291/2694

**Description**

Domaine de l'invention

L'invention concerne le domaine de la métrologie et en particulier celui du contrôle non destructif et du contrôle de santé de structures.

Etat de la Technique

Le contrôle de l'intégrité des structures (e.g. ouvrages d'art, avions ou pipelines par exemple) se fait généralement lors d'opérations de maintenance, avec inspection et intervention humaine. Un exemple de problème technique concret consiste par exemple à détecter et dimensionner une zone corrodée sur un fuselage d'avion. Pour ces contrôles d'intégrité, on utilise généralement des méthodes de contrôle dit non-destructif (par ultrasons, par méthodes électromagnétiques, etc.), utilisant une variété de transducteurs.

Un transducteur est un dispositif convertissant un signal physique en un autre. Il existe une grande variété de transducteurs. Pour la génération et la réception d'ondes acousto-élastiques se transmettant dans un matériau (un rail, un tube, une structure, etc), l'utilisation d'un transducteur *acoustique électromagnétique* (en anglais « *ElectroMagneto-Acoustic Transducer* », acronyme EMAT) peut constituer une alternative à l'utilisation un capteur piézoélectrique (acronyme PZT)

L'application principale de ce type de capteur EMAT est le contrôle non-destructif par ultrasons (ondes élastiques volumiques ou ondes élastiques guidées). Pour la génération d'onde, les capteurs de type EMAT reposent sur la génération d'un champ magnétique par un aimant (ou électroaimant) puis la création de force de Lorentz (dans les métaux) ou de magnétostriction (dans les matériaux ferromagnétiques) par le biais d'un courant électrique passant dans une bobine. Pour la mesure d'ondes, la réciproque est utilisée: dans un champ magnétique, une déformation du matériau va engendrer un courant dans une bobine pouvant être mesurée.

L'avantage principal des transducteurs EMAT par rapport aux capteurs piézoélectriques PZT mis en avant dans la littérature scientifique est l'aspect sans contact d'un capteur EMAT: celui-ci se trouve en général à une distance de quelques millimètres (appelée « *liftoff* ») de la structure à inspecter ce qui permet de s'affranchir des contraintes de couplage et d'état de surface. Cette propriété peut être cruciale dans les applications de contrôle santé intégré (« *Structural Health Monitoring* » en anglais, acronyme SHM), car le vieillissement du collage des capteurs est un frein majeur pour le déploiement de telles solutions. En s'affranchissant du collage, de nombreux problèmes concrets sont éliminés.

L'inconvénient majeur des transducteurs EMAT est un rendement bien plus faible que les transducteurs piézoélectriques PZT. Le cas échéant, pour générer des ondes d'amplitudes mesurables, il est donc nécessaire d'utiliser des puissances électriques importantes, significativement plus importantes qu'avec des transducteurs PZT. De fait, à ce jour, le critère principal pour dimensionner un système d'inspection EMAT est la puissance électrique à fournir. Un système commercialisé requiert par exemple une puissance de 6kW par émission et une tension de 1100 volts. Les systèmes de laboratoire atteignent typiquement des puissances de l'ordre de 20kW. Cette nécessité de puissance (hautes tensions) pour les systèmes EMAT constitue donc le frein majeur de cette technologie. Il est besoin de batteries importantes pour systèmes portables. La présence d'électronique de puissance limite le nombre de voies et augmente les coûts. Il est besoin de mettre en place des mesures de sécurité à mettre en œuvre pour garantir la sécurité des opérateurs. Dans le cas de travaux en atmosphère explosive (ATEX) l'utilisation de hautes tensions et densités énergétiques nécessite des mesures de protection particulières qui augmentent là-encore drastiquement les coûts et freinent le déploiement de tels systèmes. L'approvisionnement énergétique peut constituer un problème en soi. Enfin, le « cross-talk » est très important entre les canaux (il s'agit de la zone morte de mesure sur tous les canaux pendant l'émission sur un canal).

Ce besoin en puissance est présent uniquement au niveau de la génération d'onde. La réception/mesure par EMAT ne met pas en œuvre de hautes tensions : la déformation va générer un courant de faible intensité dans la bobine de l'EMAT, qui sera ensuite mesuré par un système d'acquisition. La mesure par EMAT est donc quasiment « gratuite » d'un point de vue énergétique (dans le cas où le champ magnétique est généré par un aimant permanent, si un électroaimant est utilisé, celui-ci devra tout de même être alimenté).

La littérature scientifique et brevet décrit de nombreuses utilisations de transducteurs EMAT pour la génération et la réception d'ondes élastiques de tout type. Mais toutes ces publications requièrent des puissances électriques importantes pour la génération des ondes.

D'autres références dans la littérature présentent des systèmes hybrides pour s'affranchir des courants importants. Par exemple, l'article "Narrow-band hybrid pulsed laser/EMAT system for non-contact ultrasonic inspection using angled shear waves » (Review of Progress in Quantitative Nondestructive Evaluation. Springer, Boston, MA, 1995) décrit l'utilisation d'un laser pulsé pour la génération d'ondes et utilisation d'EMAT pour la réception. Dans ce type d'article, les transducteurs EMAT ne sont pas utilisés en émission. En utilisant un autre système pour la génération d'ondes, cette méthode ne profite pas pleinement des bénéfices des transducteurs EMAT, notamment la capacité à émettre un mode guidé préférentiellement, et n'est donc pas entièrement satisfaisante.

Il existe enfin d'autres solutions connues dans l'état de la technique qui se fondent sur la mesure du bruit ambiant se propageant dans les structures mais elles utilisent des *capteurs au contact* de la structure tels que les réseaux de Bragg sur fibre optique ou les transducteurs piézoélectriques PZT, confer l'article intitulé *"Passive guided waves measurements using fiber Bragg gratings sensors"* (The Journal of the Acoustical Society of America, 2018*). Le fait que les capteurs soient *collés à* la structure peut poser problème dans le temps puisque la tenue mécanique de la colle se dégrade en vieillissant.

Dans l'état de la technique, les problèmes techniques sont donc divers et anciens: l'énergie électrique nécessaire en émission active semble incontournable et la question tenue de la colle dans le temps est une question concrète et significative pour la surveillance de structures pendant des temps longs.

Le document de brevet WO2019091705 intitulé « *Contrôle de santé d'une structure industrielle* » décrit un mode de réalisation utilisant des transducteurs EMAT, pour réaliser de l'imagerie passive. Ce document publié décrit que l'emploi de capteurs EMAT est particulièrement avantageux pour le contrôle de conduites de fluide (gaz, liquide) ou « pipelines ». Le document décrit les transducteurs comme généralement peu sensibles au vieillissement (en particulier en ce qui concerne le collage qui les maintient sur la structure à analyser).

Le document FR3073289 A1 propose une solution pour l'analyse de structures tubulaires en mode passif avec des capteurs EMAT.

Le document US5456113A divulgue une solution pour l'analyse de structures tubulaires basée sur un mode passif par émission acoustique qui requière une écoute permanente.

Il existe un besoin pour des solutions d'analyse de structures tubulaires en mode passif afin d'améliorer la détection de défaut.

Résumé de l'invention

Le document décrit des procédés et des dispositifs pour l'analyse d'une structure tubulaire (100) selon les revendications. Des aspects de logiciels sont décrits.

Le document décrit notamment des géométries de structures à inspecter et la disposition des EMAT par rapport à cette structure.

La possibilité de mesure *passive par EMAT* est aujourd'hui une question scientifique ouverte selon l'état de la technique. La mesure passive par PZT ou par FBG (fibres optiques à réseaux de Bragg) a été démontrée : elle fait l'objet de demandes de brevets (par les mêmes inventeurs).

Dans un mode de réalisation, le procédé selon l'invention comprend les étapes consistant à réaliser un contrôle par EMAT, sans génération d'ondes guidées mais en faisant une mesure dite *passive*, c'est-à-dire en utilisant les ondes naturellement présentes dans la structure, par exemple en exploitation (e.g. fluide s'écoulant dans un tube, turbulence sur aile d'avion, train passant sur une voie ferrée, etc). Les EMAT n'ayant pas à émettre d'ondes, les puissances électriques requises sont relativement faibles (uniquement pour alimenter les circuits électroniques de détection et de traitement des signaux), ce qui diminue significativement la quantité d'énergie à utiliser par rapport aux techniques dite actives (pour lesquelles une très large partie de l'énergie est utilisée pour l'émission d'ondes par les capteurs, ce qui est particulièrement vrai pour les EMAT qui ont un mauvais rendement par rapport à d'autres transducteurs). De plus, le circuit électronique requis est simplifié puisqu'il n'y a pas de circuit d'émission.

Avantageusement, le mode de mesure *passif* proposé dans ce document permet d'utiliser des batteries *légères* (puisqu'il n'est plus besoin de hautes tensions) permettant l'alimentation du circuit de réception, de l'unité de traitement embarqué des données et d'un électroaimant optionnel.

Avantageusement, les procédés et systèmes selon l'invention permettent des solutions de contrôle santé *intégrées et/ou robotisées.*

Avantageusement, étant donné que le circuit d'émission n'est pas nécessaire, *il n'y a pas de haute tension dans le système*. C'est un avantage majeur pour la sécurité des opérateurs et cela facilite grandement le déploiement de cette solution dans certains cas (pour les zones ATEX notamment, i.e. avec risques de formation d'atmosphère explosive, pour lesquelles les mesures de sécurité sont particulièrement drastiques en matière d'équipements comportant des circuits hautes tensions).

Avantageusement, l'invention permet d'inspecter des tuyauteries ou des conduites ou des tubes (pétrochimie, industrie nucléaire, circuits hydrauliques, etc). De manière plus générale, tous les domaines industriels utilisant des structures métalliques ou composites peuvent tirer avantage de la solution proposée.

Avantageusement, l'invention permet une réduction drastique des puissances nécessaires pour l'inspection. Cet avantage est critique car il permet des implémentations dans des environnements explosifs (qualification ATEX) ou pour lesquels les contraintes de masse (aéronautique) ou de coût sont cruciales.

Avantageusement, l'invention permet de tirer pleinement bénéfice de l'utilisation des EMAT (sans contact).

Avantageusement, les ondes élastiques n'étant pas générées par les transducteurs EMAT, il n'est donc pas nécessaire d'alimenter la bobine.

Avantageusement, l'électronique de contrôle et d'acquisition est moins lourde et moins onéreuse.

Avantageusement, les besoins énergétiques sont significativement réduits.

Avantageusement, il n'existe plus de « zone morte » dans la mesure. Le signal temporel est analysable dans sa totalité, il n'est nul besoin d'ignorer le début du signal (qui est saturé, donc inexploitable); ceci permet une plus grande plage de surveillance sur la structure couverte par le système, notamment le contrôle des ondes circonférentielles.

Avantageusement, la propriété « sans contact » des transducteurs EMAT est pleinement exploitée (e.g. robot d'inspection).

Description des figures

Différents aspects et avantages de l'invention vont apparaitre en appui de la description d'un mode préféré d'implémentation de l'invention mais non limitatif, avec référence aux figures ci-dessous :

La [FIG. 1] illustre un mode de réalisation, dit SHM, de l'invention ;

La [FIG. 2] montre plus en détails une couronne du système selon un mode de réalisation de l'invention ;

La [FIG. 3] montre un autre exemple d'un mode de réalisation, dit CND, selon l'invention ;

La [FIG. 4] illustre les trajets directs hélicoïdaux des ondes acousto-élastiques ;

La [FIG. 5] montre une mesure de bruit issu de la circulation d'eau dans une canalisation en inox.

Description détaillée de l'invention

Il est décrit un système pour l'analyse d'une structure tubulaire (100) comprenant : au moins deux transducteurs électromagnétique EMAT (121) et (122), dits capteurs, portés par au moins deux couronnes (110, 120) disposées autour de la structure tubulaire à analyser, et situés à une distance configurable, dite liftoff, de la structure tubulaire (100) ; des ressources de calcul et de mémoire, accédées localement et/ou à distance, configurées pour décider du moment pour mesurer le bruit ambiant dans la structure tubulaire et déterminer, pour au moins un couple de capteurs (121) et (122), une fonction représentative de la réponse impulsionnelle de la structure tubulaire (100) à partir du bruit diffus acousto-élastique présent dans la structure.

Le champ acousto-élastique désigne le champ des ondes mécaniques (sonores, ultrasonores etc.) qui se propagent dans un milieu solide. Contrairement au cas du fluide, il existe deux types d'ondes acoustiques pour un matériau solide. Ces ondes sont plus connues sous le nom d'ondes élastiques (cisaillement et compression-traction).

Le bruit est localement éliminé (les données seraient trop massives à transmettre). De l'électronique embarquée peut faire traitement du signal et/ou il est possible d'envoyer les données pour traitement sur un serveur distant.

Dans un mode de réalisation, la pose est permanente. Dans un mode de réalisation, la pose est éphémère (par exemple pose manuelle ou robotique, *infra*).

En pratique, les signaux de mesure de tous les capteurs sont reçus sensiblement simultanément (ils sont synchronisés si nécessaire). Puis, pour tous les couples possibles, ou un maximum d'entre eux, le procédé comprend une étape consistant à établir la corrélation des signaux. Dans un mode de réalisation, des couples de capteurs sont considérés (chacun étant situé sur une couronne différente). Il est également possible de considérer les couples (ou paires ou appariements) au sein d'une même couronne. En résumé, on ne saurait limiter les couples ou paires ou appairages, puisque tous les couples possibles peuvent être considérés.

Dans un développement, les deux transducteurs électromagnétique EMAT (121) et (122) sont portés par deux couronnes disposées autour du tube à inspecter, les deux transducteurs électromagnétique EMAT (121) et (122) étant situés à une distance configurable, dite liftoff, de la structure tubulaire.

La distance (131) est de l'ordre de plusieurs diamètres, soit entre 10 cm et quelques mètres. Les couronnes peuvent par exemple être clipsable ou enfichable. Dans d'autres modes de réalisation, des trous ou excavations sont effectuées dans le sol pour accéder à la conduite enterrée. Dans d'autres modes de réalisation, la conduite est exposée sur la totalité d'une section à analyser.

Dans un développement, le système comprend une pluralité N>2 de transducteurs électromagnétique EMAT, et portés par deux couronnes ou plus.

Certains capteurs peuvent tomber en panne : plus il y a de capteurs meilleure sera la résolution d'imagerie et la solution proposée sera plus robuste de ce point de vue. Inversement, un nombre élevé de capteurs augmentent les coûts (installation, etc). Il convient de trouver un compromis.

Il est très important de noter qu'un très grand nombre de capteurs n'est pas requis, notamment en raison du des modes de réalisation « robotique » ou CND décrits ci-après.

L'appariement logique entre les capteurs peut être varié, à tout le moins exploité. La couronne 1 peut « travailler » (au sens des calculs de traitement du signal) avec la couronne 2, laquelle peut travailler avec la couronne 3, etc, mais la couronne 1 peut travailler directement avec la couronne 3. Le traitement du signal qui prend en compte ces appariements peut en bénéficier (e.g. étude des chemins de propagation, round-robin, etc).

Dans un développement, au moins une couronne est configurée pour permettre la rotation du capteur qu'elle porte autour de l'axe de la structure tubulaire.

Ce mode de réalisation permet de faire varier la position relative des capteurs. Incidemment, il est notable qu'un petit nombre de capteurs (2) peut être suffisant pour multiplier les mesures.

Dans un développement, au moins une couronne est configurée pour permettre la translation du capteur par rapport à l'axe de la structure tubulaire.

Ce mode de réalisation permet de faire varier la position relative des capteurs. La combinaison des déplacements en translation et/ou en rotation permet une grande variété de points de mesure.

Dans un développement, le système comprend en outre plusieurs transducteurs électromagnétique EMAT arrangés en ligne (213) et de manière sensiblement parallèle à l'axe de la structure tubulaire à analyser.

De ce fait la résolution axiale est augmentée. Concrètement, une barre disposée entre les deux couronnes (avec des liaisons pivot par exemple) peut permettre de porter les capteurs EMAT.

Dans un développement, une partie ou tous les transducteurs EMAT sont positionnés de manière permanente dans, sur ou à proximité de la structure tubulaire.

Ce mode de réalisation correspond à un mode dit SHM : les couronnes et/ou capteurs sont intégrés dans la structure tubulaire (e.. moulage, coulés dans, etc).

Dans un développement, une couronne portant un ou plusieurs capteurs est articulée, en ce qu'elle comporte des segments de cercle ou de droite inter-reliés, de manière à pouvoir se conformer à des parties coudées et/ou à des sections de diamètre variable de la structure tubulaire, internes ou externes..

Ce mode de réalisation non représenté correspond à un mode dit CND ou « robotique » : un robot portant les deux couronnes (ou plus) portant les deux capteurs EMAT (ou plus) peut circuler à l'intérieur de la structure tubulaire (que le fluide soit présent et statique, ou en mouvement, ou bien vide). Un robot peut aussi se déplacer par l'extérieur de la conduite tubulaire. Dans un mode de réalisation, un drone porte les deux couronnes/capteurs. Suivant les modes de réalisation, le déplacement s'effectue par câble, chenilles, roues, etc. Ces modes de réalisation bénéficient du fait que les capteurs EMAT ne requièrent pas un positionnement très précis.

Les analyses de la structure peuvent suivre des modalités variées. Les «scans» peuvent être effectués avec ou sans recoupements (de sections de tube). L'exploration peut se faire en plusieurs temps : un premier passage grossier et rapide peut permettre de localiser les anomalies candidates puis des analyses plus denses (e.g. répétées dans temps et/ou l'espace) peuvent être centrées sur les anomalies sélectionnées. En d'autres termes, la distribution des capteurs sur le tube peut être diversifiée (e.g. aléatoire, motifs, treillis, etc).

Dans un développement, la fonction représentative de la réponse impulsionnelle est obtenue par inter-corrélation.

Pour chaque couple (A, B) de points de mesure de ce réseau on effectue une corrélation du champ acoustique u mesuré simultanément sur une longue période en A et en B, par exemple en appliquant (il existe d'autres possibilités de calcul) :

$$C_{AB}(t) = \int u_A(\tau)u_B(t+\tau)d\tau.$$

Il est établi que la corrélation (en toute rigueur sa dérivée) converge vers une fonction représentative de la réponse impulsionnelle entre A et B si les différentes composantes du champ d'ondes respectent la condition d'équi-répartition en énergie (la répartition en phase et en amplitude des ondes est aléatoire, hypothèse dite de « champ diffus »). La réponse impulsionnelle entre A et B est l'enregistrement que l'on obtiendrait en A si une source émettait un Dirac en B.

Les conditions d'équi-répartition en énergie peuvent être obtenues lorsque les sources sont réparties aléatoirement dans le milieu ou lorsque le nombre et la répartition des sources est limité mais le milieu est très diffusant. Des démonstrations expérimentales ont montré que la convergence était obtenue dans des gammes de fréquences intéressantes pour le SHM (soit du kilohertz à quelques mégahertz).

Par exemple, les sources de bruit naturelles dans les structures industrielles peuvent être celles associées à la couche limite turbulente en aéronautique, l'impact de vagues, les vibrations induites par les moteurs sur un bateau ou un écoulement turbulent dans un tube.

Dans la pratique cela se fait de la manière suivante : pour le couple considéré (A, B) on utilise un autre point de mesure Ci parmi l'ensemble des points disponibles. On corrèle dans un premier temps les signaux mesurés entre A et B d'une part et Ci d'autre part. Une fois les corrélations CiA et CiB effectuées, on corrèle la coda de ces signaux pour obtenir la corrélation entre A et B. Ceci pouvant être répété sur une partie ou l'ensemble des points de mesure Ci, on peut sommer l'ensemble des corrélations obtenues pour obtenir une meilleure estimation de la fonction représentative de la réponse impulsionnelle entre A et B.

De la fonction représentative de la réponse impulsionnelle obtenue par la corrélation on déduit la mesure du temps de vol entre A et B. Répétée pour tous les couples de récepteurs possibles, cette opération fournit un grand nombre de données en temps de vol que l'on peut exploiter pour effectuer une reconstruction par tomographie en vitesse de propagation.

Dans un développement, la fonction représentative de la réponse impulsionnelle est obtenue par filtre inverse passif.

Dans un mode de réalisation, l'étape consistant à déterminer par filtre inverse passif, une fonction représentative de la réponse impulsionnelle de la structure à analyser comprend les étapes consistant à (i) découper les signaux mesurés sur tous les capteurs en une pluralité de sous-vecteurs ou pseudos-sources et (ii) décomposer en valeurs singulières des matrices de propagation monochromatique.

Dans un mode de réalisation, les valeurs singulières qui sont obtenues peuvent être partitionnées dans deux groupes, un premier groupe de valeurs représentatives de l'information physique d'intérêt et un second groupe de valeurs (qui peuvent ultérieurement être mises à zéro). Différentes méthodes permettent de déterminer la valeur de seuillage (en particulier selon les régimes de décroissance des valeurs singulières lorsqu'elles sont ordonnées).

Dans un mode de réalisation, l'étape consistant à déterminer par filtre inverse passif une fonction représentative de la réponse impulsionnelle de la structure à analyser comprend les étapes consistant à a) découper le signal temporel mesuré en une pluralité de sous-vecteurs ou pseudos-sources; b) décomposer en valeurs singulières des matrices de propagation monochromatique déterminées à partir des pseudos-sources dans le domaine fréquentiel; c) obtenir une fonction représentative de la réponse impulsionnelle dans le domaine temporel par transformée de Fourier inverse.

Dans un mode de réalisation, l'étape consistant à déterminer par filtre inverse passif des fonctions représentatives de la réponse impulsionnelle de la structure pour chacun des couples de capteurs interrogés, comprend les étapes consistant à : - recevoir les signaux de mesure du champ élastique diffus depuis les N capteurs physiques FBG et/ou PZT et/ou EMAT de manière sensiblement simultanée, le champ élastique diffus ne respectant pas nécessairement une condition d'équipartition en énergie, lesdites mesures déterminant une pluralité de vecteurs temporels ;- diviser lesdits vecteurs temporels en une pluralité de sous-vecteurs ou pseudos-sources ;- pour chacune des pseudos-sources, effectuer une transformée de Fourier en fréquence w ; - pour chaque fréquence w : 1) déterminer la matrice de propagation monochromatique H(w) reliant les pseudos-sources aux points de mesure ; 2) déterminer une pluralité de valeurs singulières par décomposition en valeurs singulières de chaque matrice H(w) ; 3) ordonner et seuiller lesdites valeurs singulières en un premier groupe de valeurs représentatives de l'information physique d'intérêt et un second groupe de valeurs mises à zéro ; 4) déterminer N^2 fonctions représentatives de la réponse impulsionnelle de la structure (une pour chacun des couples de capteurs physiques réels) ; - déterminer N^2 fonctions temporelles représentatives de la réponse impulsionnelle de la structure en concaténant les transformées de Fourier inverse des N^2 fonctions représentatives de la réponse impulsionnelle calculées dans le domaine fréquentiel.

Les sous-vecteurs peuvent être appelés des « pseudos-sources »

Dans un développement, la fonction représentative de la réponse impulsionnelle est obtenue par corrélation de coda de corrélation C3.

Dans un développement, la mesure par corrélation comprend une corrélation de coda de corrélations entre capteurs. Par suite, les temps nécessaires à la mise en place peuvent être réduits, les erreurs de positionnement des points de mesure minimisés, etc. La "corrélation de coda de corrélations" consiste, pour un couple de points de mesure A et B, à choisir un point de mesure quelconque Ci sélectionné parmi l'ensemble des points de mesure (sauf A et B); à corréler les mesures pour chacun des points A et B avec ce point de mesure quelconque Ci; à corréler la coda de ces corrélations pour obtenir la corrélation entre les points de mesure A et B. Il est possible de répéter l'opération pour une partie ou l'ensemble des points de mesure Ci possibles et de sommer les corrélations obtenues pour obtenir une corrélation entre A et B avec une meilleure fiabilité. Tout ceci peut être appliqué sur tout ou partie des couples possibles de capteurs.

Une boucle de rétroaction avantageuse consiste à asservir les mesures sur la qualité de l'imagerie. Par exemple, il est possible d'injecter des ondes hautes fréquences. On peut également injecter diverses fréquences (f1, f2, ... fn) et constater si la convergence vers la fonction représentative de la réponse impulsionnelle est améliorée et/ou si l'image est plus nette. La rétroaction peut être pilotée automatiquement, et/ou manuelle.

Dans un développement, la distance entre un capteur EMAT et la structure tubulaire liftoff est adaptative ou adaptée, notamment en fonction de l'imagerie obtenue et/ou du traitement du signal, par exemple la vitesse de convergence vers la fonction de Green.

L'électronique embarquée peut être alimentée par panneaux solaire, ou par énergie dynamo, par énergie de l'écoulement du fluide (ailette immergée) ou éolien.

Il est décrit un procédé pour l'analyse d'une structure tubulaire (100), au moins deux transducteurs électromagnétique EMAT (121) et (122), dits capteurs, étant apposables ou posés dans, sur ou à proximité de la structure tubulaire (100), le procédé comprenant l'étape consistant à décider du moment pour mesurer le bruit ambiant dans la structure tubulaire et à déterminer par l'utilisation d'une analyse en mode passif par corrélation du champ ambiant, pour au moins un couple de capteurs (121) et (122), une fonction représentative de la réponse impulsionnelle de ladite structure tubulaire (100) à partir du bruit diffus acousto-élastique présent dans la structure, avec des ressources de calcul et de mémoire, accédées localement et/ou à distance ; ladite détermination de la fonction représentative de la réponse impulsionnelle pour chaque couple de capteurs étant effectuée par inter-corrélation et/ou par filtre inverse passif et/ou par corrélation de coda de corrélation.

Dans un développement, le procédé comprend en outre comprenant en outre une étape consistant à coller un film conducteur sur la structure tubulaire.

Dans un mode de réalisation, il est possible de déposer une couche mince, au moins partiellement tubulaire sur le tube. De la sorte, il est possible d'analyser des tubes en béton (non conducteurs).

Dans un développement, le procédé comprend en outre une étape de tomographie par ondes guidées pour imager la structure tubulaire.

Il est décrit un produit programme d'ordinateur, ledit programme d'ordinateur comprenant des instructions de code permettant d'effectuer les étapes du procédé, lorsque ledit programme est exécuté sur un ordinateur.

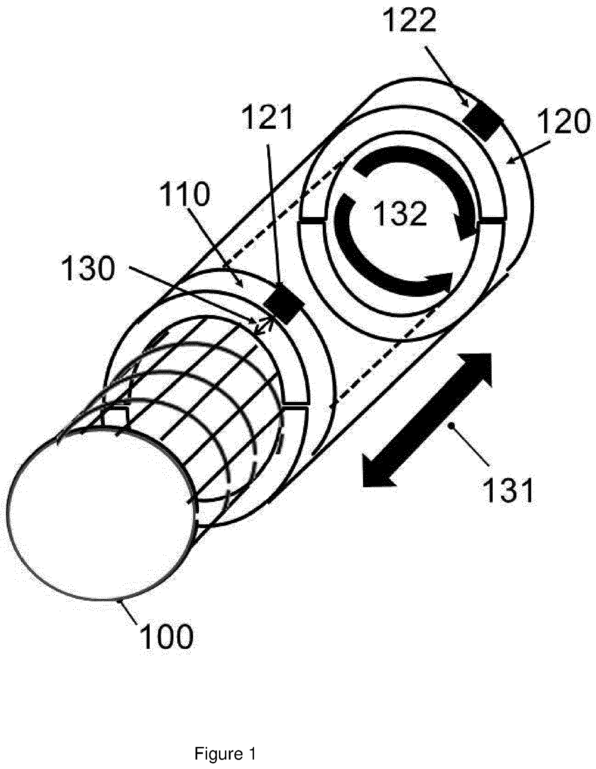

La [FIG. 1] illustre un mode de réalisation, dit SHM, de l'invention.

La figure montre un tube 100 (ou tuyau ou conduite ou pipe ou pipeline) sur lequel sont arrangés deux couronnes 110 et 120. La couronne 110 porte un ou plusieurs capteurs EMAT 121. La couronne 120 porte au moins un capteur 122.

Distance

Dans un mode de réalisation de l'invention, les deux couronnes sont à une distance 131. Dans un mode de réalisation, deux couronnes d'EMAT sont espacées d'une distance raisonnable (versus la longueur d'onde d'inspection et le diamètre du tube).

Mode SHM

Dans un mode de réalisation, les transducteurs EMAT sont disposés en réseau et sont associés de manière permanente à la structure à inspecter (par exemple dans le coude d'une tuyauterie).

Dans un mode de réalisation, le système selon l'invention est intégré (mode dit « SHM ») : les capteurs sont fixes par rapport à la structure (le tube peut être nativement instrumenté, e.g. les capteurs peuvent être noyés dans le béton). Dans un mode de réalisation, deux couronnes (ou colliers) 110 et 120 de capteurs sont installés de manière définitive autour d'une zone considérée comme critique. Cet arrangement peut être avantageux car l'imagerie s'en trouvera améliorée. Ce mode de réalisation est plus adapté dans le cas des sections de tuyauterie connues comme étant critiques car sujets à l'apparition de défauts (comparativement au reste de la tuyauterie) : les coudes sont souvent les parties de tuyauterie où l'érosion est la plus importante par rapport aux sections droites.

Nombre de capteurs

Dans un mode de réalisation, les deux couronnes sont porteuses d'un très grand nombre de capteurs de type EMAT (qui n'est toutefois pas requis).

Nombre de couronnes

Deux couronnes sont nécessaires et suffisantes pour procéder aux détections de défaut. Le fait d'ajouter des couronnes améliore la résolution de l'imagerie.

L'arrangement comprenant deux couronnes d'EMAT est particulièrement avantageux en passif pour les raisons suivantes. L'acquisition passive est particulièrement favorable aux méthodes et algorithmes d'imagerie itératifs. La mesure étant en effet quasi-gratuite d'un point de vue énergétique, acquérir plus de signal de bruit après l'obtention d'une première image, s'il s'avère a posteriori que sa résolution n'est pas satisfaisante, n'est donc en général pas un problème comme ça l'est en actif où il faut réarmer les circuits d'émission (i.e. recharger de grosses capacités).

Ceci est donc très avantageux pour les configurations d'inspection en deux couronnes pour lesquelles la vision sur les défauts est partielle (les couronnes n'offrent un angle d'attaque sur les défauts que limité, certaines faces du défaut ne sont pas directement visibles depuis les capteurs). En effet, dans ce cas on procède généralement à de l'imagerie faisant appel à des capteurs virtuels selon un procédé itératif : une première image calculée à partir des signaux mesurés sur les capteurs physiques est obtenue, qu'on utilise pour calculer les signaux qui seraient reçus à des positions virtuelles.

Ces signaux sont ensuite réinjectés pour calculer une nouvelle image avec une meilleure résolution sur le défaut car fondée sur de nouveaux trajets (et donc angle d'attaque des rayons) sur le défaut. Si le processus ne converge pas il faut alors déplacer les capteurs physiques à ces positions (i.e. par rotation des couronnes sur un système robotisé), et faire une nouvelle acquisition. Cette stratégie d'imagerie permet d'exploiter un système avec peu de capteurs sur les couronnes (donc moins coûteux et moins intrusif à déployer) tout en obtenant une image avec une résolution maitrisée.

*A contrario,* travailler avec des EMAT en passif permet d'utiliser des EMAT moins encombrants (courants moins forts donc câbles plus fins, bobinages plus serrés car moins de contraintes d'arcs électriques), ce qui permet d'augmenter le nombre d'EMAT sur la couronne et donc d'améliorer significativement la qualité de l'imagerie.

Calcul de la réponse impulsionnelle

A l'étape suivante, les ondes guidées équivalentes entre chaque couple de capteur sont reconstruites par Filtre Inverse Passif, ou par corrélation de bruit ambiant ou par corrélation de coda de corrélation (C3). C'est une étape de traitement du signal (post traitement).

A une étape ultérieure, une ou plusieurs images sont déterminées, par application d'algorithmes de tomographie par exemple. Une image représente la santé de la structure (présence de corrosion, d'érosion, de trou...).

Les étapes ci-dessus peuvent être réitérées au cours du temps, par exemple pour assurer un suivi continu et régulier de la structure.

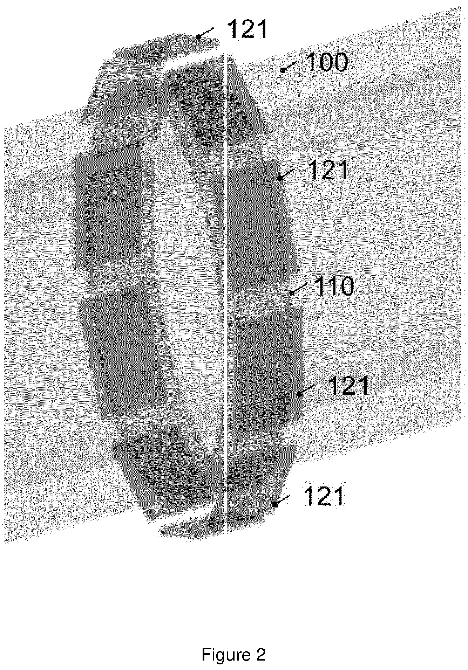

La [FIG. 2] montre plus en détails une couronne du système selon un mode de réalisation de l'invention.

Dans un mode de réalisation le réseau de transducteurs est en forme d'anneau, ou de collier.

Sans contact

L'absence de contact garantit la non dégradation dans le temps de la mesure sur le tuyau. L'absence de contact garantit en particulier la non-dégradation dans le temps de la mesure sur le tube car il n'y a pas besoin de couplant ou de colle se dégradant dans le temps pour transmettre le signal du capteur vers la paroi métallique du tube. Autrement dit, l'absence de contact garantit une meilleure stabilité du signal au fil du temps du fait de l'absence de couplant ou colle se dégradant dans le temps. Les transducteurs EMAT sont installés de manière à maintenir un liftoff 130 (distance entre un capteur et la structure) relativement constant entre les transducteurs EMAT et le tuyau.

Liftoff adaptatif

Chaque EMAT est installé de manière à maintenir un « liftoff » suffisamment constant entre l'EMAT et le tuyau quand le robot évolue dans la tuyauterie. La distance peut être adaptative, i.e. la distance peut être contrôlée au moyen de capteurs et d'actuateurs. La distance peut être par exemple être maintenue sensiblement constante, au cours des évolutions dans l'espace des capteurs.

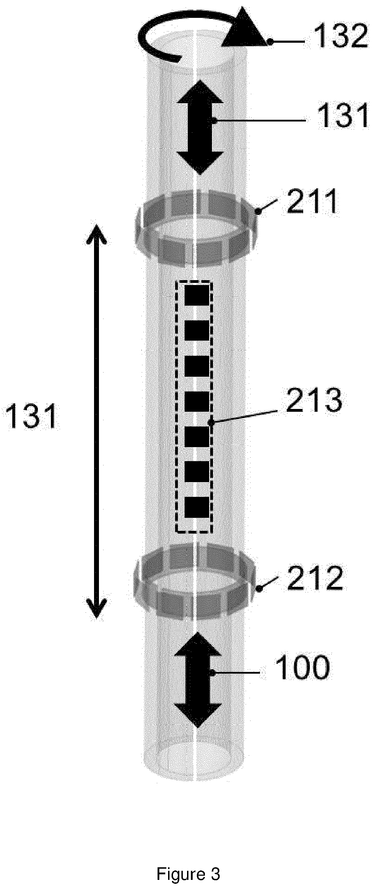

La [FIG. 3] montre un autre exemple d'un mode de réalisation, dit CND, selon l'invention.

Dans un mode de réalisation, le système selon l'invention amovible (mode CND ou « robotique »).

La figure montre un tube 200, instrumenté de deux couronnes (110, 120) de transducteurs EMAT. Le mode de fonctionnement qui est illustré correspond à un mode de contrôle non destructif, i.e. avec des capteurs non permanents.

La couronne 110 et/ou la couronne 120 peuvent être déplacées, en translation 131 et/ou en rotation 132. Le déplacement peut être manuel ou bien automatisé (par un robot externe, un drone, ou bien par de la mécanique interne aux couronnes (e.g. chenilles, crans, galets, roues, etc). En particulier, les déplacements en translation et/ou en rotation peuvent être asservis à la qualité d'image obtenue (infra).

Dans un mode de réalisation, il est possible d'ajouter une ligne 213 le long de la génératrice du tuyau, cela permet d'améliorer encore plus la qualité d'imagerie (notamment la résolution axiale). Cet ensemble de capteurs (211, 212, 213) constitue une « nœud de surveillance » d'une section critique d'une structure à inspecter. Il peut être rendu totalement autonome à l'aide de l'utilisation de batteries et de panneaux solaires permettant la recharge des batteries qui alimentent l'électronique qui pilote le nœud (électronique gérant l'acquisition des signaux et qui peut aussi servir au traitement du signal et/ou à transférer les données vers une centrale de post-traitement et de décision).

Pour certaines applications, et notamment dans le cas du contrôle de conduites forcées, il peut être avantageux ou requis de contrôler l'ensemble de la conduite.

Dans un mode de réalisation, le système selon l'invention comprend l'utilisation d'un robot porteur d'une ou de plusieurs couronnes de transducteurs EMAT.

Suivant les cas, le robot peut se déplacer à l'intérieur et/ou à l'extérieur de la conduite (s'il n'y a pas de brides insurmontables pouvant gêner le déplacement du robot). L'utilisation de transducteurs en dedans et en dehors de la conduite est avantageuse en matière d'imagerie.

Les capteurs peuvent être fixes ou amovibles, par exemple déplacés par un opérateur ou un robot.

Dans un mode de réalisation, un robot intègre une ou plusieurs couronnes d'EMAT permettant un contrôle par scan de l'ensemble d'une conduite forcée.

Une telle solution est intéressante quand il faut scanner plusieurs centaines de mètres de conduite. En effet, si cette conduite est constituée d'un ensemble de tronçons présentant des brides à leurs extrémités, le guide d'onde est perturbé par la présence des brides ce qui empêche la propagation des ondes guidées sur plusieurs centaines de mètres.

Un robot permet de pallier ce problème en contrôlant l'ensemble de la conduite tronçon par tronçon.

Asservissements

Afin d'améliorer l'imagerie, le robot mobile peut alors se déplacer de manière à générer un recouvrement des images permettant de rendre l'imagerie et le contrôle plus robuste.

Dans un mode de réalisation, le robot est configuré pour pouvoir évoluer au niveau des coudes de la conduite forcée.

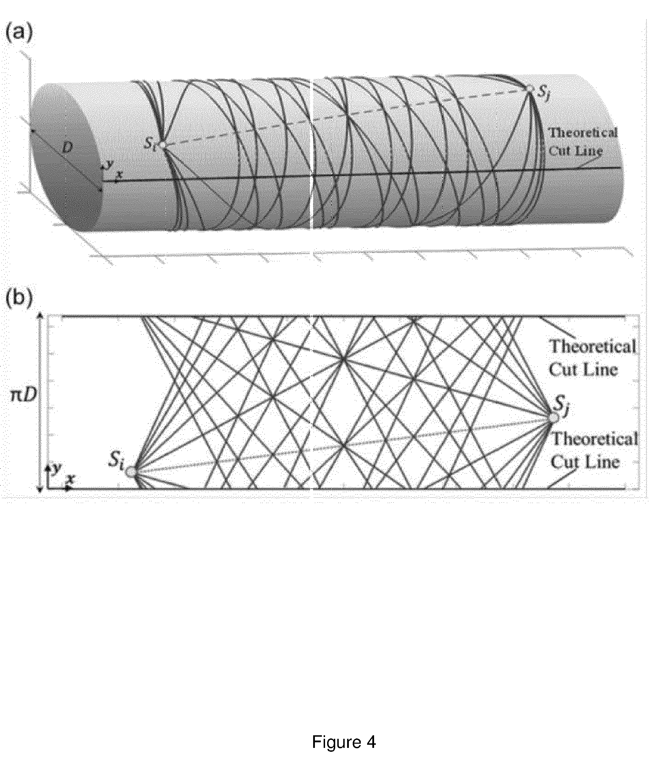

La [FIG. 4] illustre les trajets directs et hélicoïdaux des ondes acousto-élastiques dans un tube.

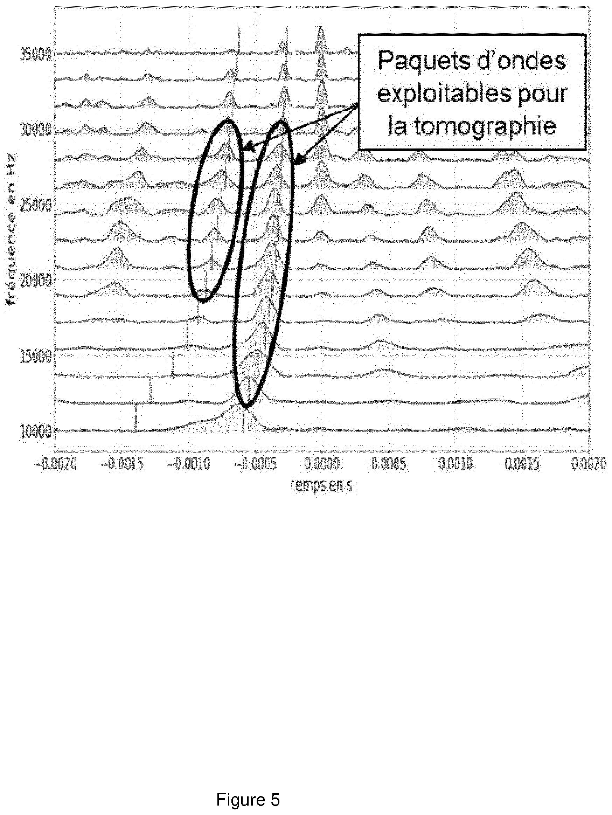

La [FIG. 5] montre une mesure de bruit issu de la circulation d'eau dans une canalisation en inox.

**La** canalisation en inox de 273 mm de diamètre, 2 mm d'épaisseur pour un débit de 25L/s. Les reconstructions passives entre 2 capteurs espacés de 400 mm montrent que le bruit est exploitable entre 10 et 30 kHz pour cette configuration.

Mode passif

Les mesures s'effectuent de façon passive, c'est-à-dire sans émission d'ondes acoustiques.

On rappellera les principes suivants sur les modes de mesures, i.e. le mode actif et le mode passif :

(1) Il y a lieu de faire une distinction entre un système opérant en mode dit actif et un système opérant en mode dit passif :

1a. en mode actif, le système émet une onde élastique dans la structure et mesure le signal résultant de l'interaction de l'onde avec le défaut éventuel.

1b. en mode passif, le système mesure les ondes se propageant naturellement dans la structure (c'est-à-dire sans émission d'ondes par le système) et en tire des conclusions sur la présence d'un défaut.

(2) Il y a deux manières de procéder en mode passif :

(2a) une méthode historique appelée méthode par « émission acoustique », très connue, normalisée et appliquée industriellement.

(2b) une méthode décrite dans la présente invention, appelée méthode par « corrélation du champ ambiant ».

(3) la différence entre les deux approches du mode passif :

> dans la méthode (2a) par « émission acoustique », le système capte les ondes acoustiques émises par le défaut lorsque ce dernier grandit :

- si le défaut est là, il peut ne pas y avoir d'émission d'ondes émises si le défaut ne se modifie pas, et donc pas de détection du défaut ;
- le système doit être allumé en permanence pour ne pas rater l'événement d'une émission acoustique. Le brevet US 5,456,113 A décrit une telle approche, ainsi qu'une solution en mode actif.

➢ avec la méthode (2b) par « corrélation du champ ambiant », le moment pour procéder à l'analyse de la présence de défaut est décidé ; le système écoute alors le bruit ambiant et par un traitement des informations, tire des conclusions sur la présence ou non de défaut :

- il y a donc détection de défaut même si le défaut ne se propage pas ;
- le système ne doit être allumé qu'au moment où l'on souhaite faire le diagnostic.

Par le mode passif (2b) utilisé dans la présente invention, la consommation d'énergie est réduite et permet des solutions embarquées (par exemple à bord d'un avion, d'un bateau ou au fond de la mer).

La méthode produit une cartographie de la zone à contrôler facilement interprétable (ce qui limite les risques de fausses alarmes). La méthode est d'autant plus efficace que le champ acoustique est diffus, c'est-à-dire que des éléments géométriques diffractent de multiples fois le champ acoustique, ce qui est particulièrement vrai dans les structures industrielles qui ne sont jamais de simples tubes mais comportent par exemple des raidisseurs, des rivets ou encore des surépaisseurs locales qui diffractent les ondes et renforcent le caractère diffus du champ.

Procédés d'imagerie

Dans un mode de réalisation, le procédé selon l'invention comprend en outre une étape de tomographie.

Dans un développement, la méthode comprend en outre une étape de reconstruction des vitesses de propagation par tomographie, l'imagerie étant réalisée par l'inversion de l'ensemble des temps de vols entre les capteurs, chaque temps de vol pour chaque paire de capteurs étant déduit de la mesure de corrélation. Ce développement est optionnel. Il présente l'avantage d'une interprétation ultérieure améliorée.

Dans un développement, la température de la structure est mesurée et une variation de temps de vol induite par un changement de température est compensée. La température peut en effet influer sur les temps de vol et **il** est appréciable de pouvoir corriger ou compenser les effets thermiques. Concrètement, un thermocouple peut être utilisé mais d'autres méthodes de mesure sont possibles.

Dans un développement (en mode SHM), l'imagerie de la tuyauterie par tomographie est effectuée par la mesure d'au moins deux temps de vol, une première mesure étant effectuée dans un état initial ou de référence et une seconde mesure étant effectuée dans un état ultérieur (pour les mêmes couples de points de mesure). L'état ultérieur est dit "actuel", il correspond donc au temps présent de la mesure ("deuxième jeu de mesure").

La réalisation d'une tomographie (entièrement optionnelle) sur les données issues de la première mesure permet en particulier d'identifier certaines particularités géométriques de la tuyauterie. Ceci correspond à une mesure statique faite dans l'état initial (ou de référence). L'imagerie de la tuyauterie au repos peut être éventuellement soustraite d'images ultérieures de la tuyauterie (soustraction de pixels, c'est-à-dire en matière de contenu de l'image). En d'autres termes, cette cartographie optionnelle permet d'identifier certaines particularités géométriques de la tuyauterie afin de ne pas les confondre avec des défauts sur les cartographies obtenues sur le deuxième jeu de mesure.

Dans un développement, la méthode comprend en outre une seconde mesure effectuée dans un état ultérieur pour les mêmes couples de points de mesure que la première mesure et comprend en outre une cartographie par tomographie des variations de vitesses de propagation dans la tuyauterie entre l'état initial et l'état ultérieur obtenue à partir des différences des temps de vols mesurés entre les deux états. En d'autres termes, il est procédé à la mesure de la variation des temps de vols (mesurés pour les couples) entre les deux états. Ceci permet d'obtenir par tomographie une cartographie des variations de vitesse de propagation des ondes élastiques (élasto-acoustiques) entre l'instant de la mesure associé à l'état actuel (présent) et l'instant associé à l'état de référence. Par exemple entre l'instant t de la mesure et l'instant t0 initial, on pourra constater que les ondes vont "plus lentement" (respectivement "plus vite") à certains endroits et en déduire l'identification des défauts ou des dommages occasionnés à la structure.

Selon un mode réalisation particulier de l'invention, la structure à examiner est "imagée". Cette imagerie permet des interprétations plus aisées que celles découlant de l'analyse des signaux bruts, puisque les singularités géométriques de la structure apparaissent sous une forme visuelle et ne sont pas confondues avec un défaut. Dans certains modes de réalisation, l'état de référence n'est alors plus nécessaire.

Les tuyauteries industrielles sont souvent très complexes géométriquement (du fait de raidisseurs, de rivets, de collages, ...) et par suite apparaissent une multitude d'échos ultrasonores. Une imagerie aide donc considérablement à l'interprétation des signaux.

Par ailleurs, une multiplicité de capteurs augmente la résolution de l'imagerie et renforce donc les avantages de l'invention.

La méthode de tomographie selon l'invention inverse l'ensemble des temps de vol mesurés, afin de reconstruire une carte de vitesses de propagation compatibles avec tous les temps de vols. Pour les ondes guidées, la vitesse de propagation dépendant de l'épaisseur de la tuyauterie (par une relation connue, i.e. les courbes de dispersion), cette carte de vitesse de propagation est transposable en une carte d'épaisseur si l'on cherche à détecter de la corrosion. Cette méthode fonctionne aussi, par exemple, pour détecter le délaminage d'une tuyauterie composite (puisqu'au niveau du délaminage, la vitesse des ondes guidées est également modifiée).

Dans le mode de réalisation SHM, la carte que l'on obtient est une image de la structure. Cette image est interprétable : l'étendue de la zone endommagée est rendue visible. Pour un dommage de corrosion, par exemple, il devient donc possible de connaître l'étendue et l'épaisseur résiduelle. Par suite, la gravité du dommage peut être évaluée, afin le cas échéant de prendre des mesures correctives.

En mode SHM ou CND, l'obtention d'une cartographie de la structure permet donc de détecter un ou plusieurs défauts, sans avoir besoin de soustraire le signal mesuré à un instant t à celui mesuré à un instant t0, état de référence pour lequel on considère que la structure est saine. La fourniture préalable de cet état de référence implique de nombreuses contraintes (par exemple, nécessité de construire une base de données avec des mesures à toutes les températures qu'aurait à subir la structure, problèmes en cas de vieillissement des capteurs entraînant de fausses alarmes, etc.)

Une étape peut en effet consiste à réaliser l'imagerie de la zone contrôlée ; par exemple à l'aide de la tomographie par ondes guidées ou d'autres algorithmes d'imagerie (DAS, SAFT, Excitelet, RAPID, ...).

Concernant la tomographie, différents modes de réalisation sont décrits ci-après.

Dans un mode de réalisation, une tomographie par rayons droits avec des données d'entrée en temps de vol est généralement robuste et rapide, mais généralement limitée aux défauts peu étendus et peu profonds.

Dans un mode de réalisation, une tomographie par rayons courbés avec des données d'entrée en temps de vol peut prendre en compte les phénomènes de réfraction mais est peu robuste dès lors que le défaut est diffractant.

Dans un mode de réalisation, une tomographie ondulatoire (tomographie en diffraction) avec des données comprenant le champ total monochromatique peut prendre en compte les phénomènes de diffraction mais est généralement limitée aux petits défauts (potentiellement profonds)

Dans un mode de réalisation, une tomographie de type hybride (e.g. propriétaire "HARBUT") avec des données d'entrée en temps de vol et du champ total monochromatique peut prendre à la fois en compte les phénomènes de diffraction et de réfraction mais peut nécessiter un nombre significatif de capteurs si la résolution maximale doit être atteinte.

Plusieurs autres techniques ou méthodes d'imagerie peuvent être utilisées, seules ou en combinaison.

La technique d'imagerie par focalisation en tous points (en anglais «*Total Focusing Method*») consiste à procéder à l'acquisition de la série complète de signaux reliant tous les éléments en émission/réception et à sommer de manière cohérente les signaux en tout point de la zone imagée.

La technique d'imagerie peut se faire par synthèse d'ouverture (en anglais *«Synthetic aperture focusing technique»,* acronyme SAFT). Cette technique permet l'obtention d'une image qui soit facile à interpréter, en incluant l'influence des transducteurs, leur couplage et la suppression du bruit de l'image.

La technique d'imagerie peut se faire par filtrage spatial ou par formation de faisceaux ou par formation de voies (en anglais «*Beamforming*»). Ce type de technique est une technique de traitement du signal utilisée dans les réseaux d'antennes et de capteurs pour l'émission ou la réception directionnelle de signaux, en combinant des éléments d'un réseau d'antennes à commande de phase de telle façon que dans des directions particulières, les signaux interfèrent de façon constructive tandis que dans d'autres direction les interférences soient destructives.

Le retournement temporel est un procédé physique applicable aux ultrasons qui permet à une onde de retourner vers sa source dans le cas d'une propagation non dissipative.

La technique d'imagerie par classification de signaux multiples (en anglais *«MUltiple Signal Classification»* acronyme MUSIC) est une méthode à haute résolution qui s'appuie notamment sur des modèles paramétriques de signal (e.g. propriétés particulières de la matrice de covariance du signal, permettant de séparer l'espace des données en deux sous-espaces, l'espace signal engendré par les sinusoïdes, et l'espace bruit qui est son complémentaire orthogonal). En particulier, la méthode MUSIC s'appuie sur l'espace du bruit.

Dans la technique d'imagerie par «*Excitelet*» (pas de traduction en français), le signal résiduel est corrélé avec les signaux d'une librairie, appelés atomes, correspondants aux signaux résiduels calculés avec un modèle de propagation qui comprend plusieurs modes et prend en compte l'effet dispersif du matériau et l'impédance électromécanique des transducteurs.

La technique d'imagerie par formation de faisceaux de retard et sommation (en anglais «*Delay-and-sum*») est une variante de filtrage spatial mentionné précédemment. La technique d'imagerie par filtrage spatial Capon (en anglais *«Minimum variance distortionless response»* acronyme MVDR) est également une variante de filtrage spatial.

Des algorithmes de reconstruction pour l'inspection probabiliste des dommages (en anglais *«Reconstruction Algorithm for the Probabilistic Inspection of Damage»*, acronyme RAPID) peuvent être utilisés. Ce type de cartographie se fonde sur l'analyse statistique des différences de certaines caractéristiques des signaux mesurés dans un état de référence (sans défaut) et dans l'état courant (potentiellement endommagé).

Dans un mode de réalisation, la tomographie est une tomographie d'ondes ultrasonores de volume.

La propagation libre des ondes élastiques dans un milieu illimité est gouvernée par les seules équations du mouvement. En pratique, le milieu de propagation est souvent limité par une ou plusieurs frontières. Si ces frontières forment une structure de telle sorte que toutes ses dimensions caractéristiques soient très grandes devant la longueur d'onde, les ondes élastiques peuvent être qualifiées d'ondes élastiques de volume (les frontières ne perturbent pas la propagation des ondes dans le volume mais induisent uniquement une réflexion lorsque l'onde s'en approche).

Dans un mode de réalisation, la tomographie est une tomographie d'ondes ultrasonores guidées.

Lorsqu'une dimension caractéristique du milieu de propagation (par exemple l'épaisseur de la tuyauterie) se rapproche de la longueur d'onde, les ondes élastiques peuvent être qualifiées d'ondes guidées. En effet, les ondes se réfléchissent sur les surfaces ou frontières du milieu (conditions aux limites). La propagation des ondes est désormais gouvernée à la fois par les équations du mouvement et par les conditions aux limites imposées sur les frontières. Les frontières du milieu (de la structure) perturbent la propagation des ondes en les contraignant.

Il existe une très grande diversité d'ondes guidées en fonction de la structure et des propriétés des milieux. Dans le cas des structures fines telles que les plaques et les tuyauteries, les ondes guidées qui apparaissent naturellement sont les ondes de Rayleigh-Lamb. En SHM, les ondes de Lamb excitent toute l'épaisseur de la structure et les ondes de Rayleigh se propagent en surface.

Ces ondes peuvent s'analyser comme une superposition de réflexions successives d'ondes de volume sur les surfaces de la structure.

Dans un mode de réalisation, la tomographie est effectuée par analyse des temps de vol.

La tomographie par analyse des temps de vol n'est pas toujours optimale. Cette imagerie peut être réalisée par inversion de l'ensemble des temps de vols entre les capteurs EMAT, chaque temps de vol pour chaque paire de capteurs étant déduit de la mesure par filtre inverse passif.

Implémentations logiques et/ou matérielles.

L'invention peut s'implémenter à partir d'éléments matériel et/ou logiciel. Elle peut être disponible en tant que produit programme d'ordinateur sur un support lisible par ordinateur. Le support peut être électronique, magnétique, optique ou électromagnétique. Les moyens ou ressources informatiques peuvent être centralisés et/ou être distribués ("Cloud computing"), éventuellement avec ou selon des technologies de pair-à-pair et/ou de virtualisation et/ou de redondance. Le code logiciel peut être exécuté sur n'importe quel processeur approprié (par exemple, un microprocesseur) ou cœur de processeur ou un ensemble de processeurs, qu'ils soient prévus dans un dispositif de calcul unique ou répartis entre plusieurs dispositifs de calcul. La mise en œuvre informatique de l'invention peut utiliser des systèmes centralisés (e.g. client-serveur ou maître-esclave) et/ou des systèmes distribués (e.g. architecture de type pair-à-pair utilisant des ressources informatiques accessibles, éventuellement de manière opportuniste e.g. réseaux ad hoc, etc.). Le système (ou ses variantes) implémentant une ou plusieurs des étapes du procédé peut utiliser un ou plusieurs circuits électroniques dédiés ou un circuit à usage général. Le procédé peut aussi être mis en œuvre sur une machine de calcul reprogrammable (un processeur ou un microcontrôleur, par exemple) exécutant un programme comprenant une séquence d'instructions, ou sur une machine de calcul dédiée (par exemple un ensemble de portes logiques comme un FPGA ou un ASIC, ou tout autre module matériel). Un circuit dédié peut notamment améliorer les performances. La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple un logiciel d'application, un micro logiciel, un microcode, APIs, web services, ou toute autre forme d'instruction d'ordinateur) qui peut être utilisé pour programmer un ou plusieurs processeurs pour mettre en œuvre des étapes du procédé.

**Revendications**

1. Système pour l'analyse d'une structure tubulaire (100) comprenant :

  - au moins deux transducteurs électromagnétiques EMAT (121) et (122) dits capteurs ; et
  - des ressources de calcul et de mémoire, accédées localement et/ou à distance, configurées pour décider du moment pour mesurer le bruit ambiant dans la structure tubulaire et déterminer pour au moins un couple de capteurs (121) et (122), à partir du bruit diffus acousto-élastique mesuré, une fonction représentative de la réponse impulsionnelle de la structure tubulaire (100) par l'utilisation d'une analyse en mode passif, ladite détermination de la fonction représentative de la réponse impulsionnelle pour chaque couple de capteurs étant effectuée par inter-corrélation et/ou par filtre inverse passif et/ou par corrélation de coda de corrélation ;

  le système étant **caractérisé en ce que** lesdits au moins deux transducteurs électromagnétiques EMAT sont portés par au moins deux couronnes (110, 120) disposées autour de la structure tubulaire à analyser, et sont situés à une distance configurable, dite liftoff, de la structure tubulaire.

2. Système selon la revendication 1, dans lequel au moins une couronne est configurée pour permettre la rotation du capteur qu'elle porte autour de l'axe de la structure tubulaire.

3. Système selon la revendication 1 ou 2, dans lequel au moins une couronne est configurée pour permettre la translation du capteur par rapport à l'axe de la structure tubulaire.

4. Système selon la revendication 1, comprenant en outre plusieurs transducteurs électromagnétiques EMAT arrangés en ligne (213) et de manière sensiblement parallèle à l'axe de la structure tubulaire à analyser.

5. Système selon l'une quelconque des revendications précédentes, dans lequel un arrangement (couronnes, capteurs) est installé de manière permanente autour de la structure tubulaire.

6. Système selon l'une quelconque des revendications précédentes, dans lequel une couronne portant un ou plusieurs capteurs est articulée, en ce qu'elle comporte des segments de cercle ou de droite inter-reliés, de manière à pouvoir se conformer à des parties coudées et/ou à des sections de diamètre variable de la structure tubulaire, internes ou externes.

7. Système selon la revendication 1, dans lequel les ressources de calcul et de mémoire sont configurées pour déterminer une fonction représentative de la réponse impulsionnelle par inter-corrélation.

8. Système selon la revendication 1, dans lequel les ressources de calcul et de mémoire sont configurées pour déterminer une fonction représentative de la réponse impulsionnelle par filtre inverse passif.

9. Système selon la revendication 1, dans lequel les ressources de calcul et de mémoire sont configurées pour déterminer une fonction représentative de la réponse impulsionnelle par corrélation de coda de corrélation C3.

10. Système selon l'une quelconque des revendications précédentes, dans lequel la distance liftoff entre un capteur EMAT et la structure tubulaire est adaptative ou adaptée, notamment en fonction de l'imagerie obtenue et/ou du traitement du signal, par exemple la vitesse de convergence vers la fonction de Green.

11. Procédé pour l'analyse d'une structure tubulaire (100), au moins deux transducteurs électromagnétiques EMAT (121) et (122), dits capteurs, étant portés par au moins deux couronnes (110, 120) disposées autour de la structure tubulaire à analyser, et étant situés à une distance configurable, dite liftoff, de la structure tubulaire, le procédé comprenant une étape consistant à décider du moment pour mesurer le bruit ambiant dans la structure tubulaire et à déterminer par l'utilisation d'une analyse en mode passif par corrélation du champ ambiant, pour au moins un couple de capteurs (121) et (122), à partir du bruit diffus acousto-élastique mesuré, une fonction représentative de la réponse impulsionnelle de ladite structure tubulaire (100), avec des ressources de calcul et de mémoire, accédées localement et/ou à distance ; ladite détermination de la fonction représentative de la réponse impulsionnelle pour chaque couple de capteurs étant effectuée par inter-corrélation et/ou par filtre inverse passif et/ou par corrélation de coda de corrélation.

12. Procédé selon la revendication 11, comprenant en outre une étape consistant à coller un film conducteur sur la structure tubulaire.

13. Procédé selon la revendication 11 ou 12, comprenant en outre une étape de tomographie par ondes guidées pour imager la structure tubulaire.

**14.** Produit programme d'ordinateur, ledit programme d'ordinateur comprenant des instructions de code qui conduisent le système selon l'une des revendications 1 à 10 à effectuer les étapes du procédé de l'une quelconque des revendications 11 ou 12, lorsque ledit programme est exécuté sur un ordinateur.

**Patentansprüche**

**1.** System zur Analyse einer rohrförmigen Struktur (100), umfassend:

- mindestens zwei als Sensoren bezeichnete elektromagnetische EMAT-Transduktoren (121) und (122); und
- Rechen- und Speicherressourcen, auf die lokal und/oder entfernt zugegriffen wird, die konfiguriert sind, um über den Zeitpunkt zum Messen des Umgebungsgeräuschs in der rohrförmigen Struktur zu entscheiden und für mindestens ein Paar von Sensoren (121) und (122) ausgehend vom gemessenen akustisch-elastischen ausgestrahlten Geräusch eine Funktion, die die Impulsantwort der rohrförmigen Struktur (100) darstellt, durch die Verwendung einer Analyse im passiven Modus zu bestimmen, wobei die Bestimmung der Funktion, die die Impulsantwort für jedes Paar von Sensoren darstellt, durch Interkorrelation und/oder durch einen passiven Umkehrfilter und/oder durch Korrelation von Coda-Korrelation durchgeführt wird;

wobei das System **dadurch gekennzeichnet ist, dass** die mindestens zwei elektromagnetischen EMAT-Transduktoren von mindestens zwei Kronen (110, 120) getragen werden, die um die zu analysierende rohrförmige Struktur herum angeordnet sind und sich in einem konfigurierbaren, als Liftoff bezeichneten Abstand zur rohrförmigen Struktur befinden.

**2.** System nach Anspruch 1, wobei mindestens eine Krone konfiguriert ist, um die Drehung des Sensors, den sie trägt, um die Achse der rohrförmigen Struktur zu ermöglichen.

**3.** System nach Anspruch 1 oder 2, wobei mindestens eine Krone konfiguriert ist, um die Verschiebung des Sensors in Bezug auf die Achse der rohrförmigen Struktur zu ermöglichen.

**4.** System nach Anspruch 1, weiter umfassend mehrere elektromagnetische EMAT-Transduktoren, die in einer Reihe (213) und im Wesentlichen parallel zur Achse der zu analysierenden rohrförmigen Struktur angeordnet sind.

**5.** System nach einem der vorstehenden Ansprüche, wobei eine Anordnung (Kronen, Sensoren) auf permanente Weise um die rohrförmige Struktur herum angebracht ist.

**6.** System nach einem der vorstehenden Ansprüche, wobei eine Krone, die einen oder mehrere Sensoren trägt, gelenkig ist, und dadurch, dass sie untereinander verbundene Kreis- oder Geradensegmente umfasst, sodass diese sich an gebogene Teile und/oder an Teilabschnitte mit variablem Durchmesser, intern oder extern, der rohrförmigen Struktur anpassen können.

**7.** System nach Anspruch 1, wobei die Rechen- und Speicherressourcen konfiguriert sind, um eine Funktion, die die Impulsantwort darstellt, durch Interkorrelation zu bestimmen.

**8.** System nach Anspruch 1, wobei die Rechen- und Speicherressourcen konfiguriert sind, um eine Funktion, die die Impulsantwort darstellt, durch einen passiven Umkehrfilter zu bestimmen.

**9.** System nach Anspruch 1, wobei die Rechen- und Speicherressourcen konfiguriert sind, um eine Funktion, die die Impulsantwort darstellt, durch Korrelation der Coda-Korrelation C3 zu bestimmen.

**10.** System nach einem der vorstehenden Ansprüche, wobei der Liftoff-Abstand zwischen einem EMAT-Sensor und der rohrförmigen Struktur anpassbar oder angepasst ist, insbesondere in Abhängigkeit von der erhaltenen Bildgebung und/oder der Signalverarbeitung, beispielsweise der Geschwindigkeit der Konvergenz zur Green-Funktion.

**11.** Verfahren zur Analyse einer rohrförmigen Struktur (100), wobei mindestens zwei als Sensoren bezeichnete elektromagnetische EMAT-Transduktoren (121) und (122), die von mindestens zwei Kronen (110, 120) getragen werden, die um die zu analysierende rohrförmige Struktur herum angeordnet sind und sich in einem als Liftoff bezeichneten, konfigurierbaren Abstand zur rohrförmigen Struktur befinden, wobei das Verfahren einen Schritt umfasst, der darin besteht, über den Zeitpunkt zum Messen des Umgebungsgeräuschs in der rohrförmigen Struktur zu entscheiden und für mindestens ein Paar von Sensoren (121) und (122) ausgehend vom gemessenen akustisch-elastischen ausgestrahlten Geräusch durch die Verwendung einer Analyse im passiven Modus durch Korrelation des Umgebungsfeldes eine Funktion, die die Impulsantwort der rohrförmigen Struktur (100) darstellt, mit Rechen- und Speicherressourcen, auf die lokal und/oder entfernt zugegriffen wird, zu bestimmen; wobei die Bestimmung der Funktion, die die Impulsantwort für jedes Paar von Sensoren darstellt, durch Interkorrelation und/oder durch einen passiven Umkehrfilter und/oder durch Korrelation von Coda- Korrelation durchgeführt wird.

12. Verfahren nach Anspruch 11, weiter umfassend einen Schritt, der darin besteht, eine leitfähige Folie auf die rohrförmige Struktur zu kleben.

13. Verfahren nach Anspruch 11 oder 12, weiter umfassend einen Schritt der Tomographie durch geleitete Wellen, um die rohrförmige Struktur abzubilden.

14. Computerprogrammprodukt, wobei das Computerprogramm Codeanweisungen umfasst, die das System nach einem der Anspruch 1 bis 10 veranlassen, die Schritte des Verfahrens nach einem der Ansprüche 11 oder 12 durchzuführen, wenn das Programm auf einem Computer ausgeführt wird.

**Claims**

1. A system for analyzing a tubular structure (100) comprising:

    - at least two electromagnetic transducers EMAT (121) and (122), referred to as sensors; and
    - computing and memory resources, accessed locally and/or remotely, configured to determine when to measure ambient noise in the tubular structure and to determine, for at least one pair of sensors (121) and (122), based on the measured acoustic elastic diffuse noise, a function representative of the impulse response of the tubular structure (100) using passive mode analysis, said determination of the function representative of the impulse response for each pair of sensors being performed by cross-correlation and/or by passive inverse filtering and/or by correlation tail correlation;

    the system being **characterized in that** said at least two electromagnetic transducers (EMAT) are carried by at least two rings (110, 120) disposed around the tubular structure to be analyzed, and are located at a configurable distance, referred to as liftoff, from the tubular structure.

2. The system according to claim 1, wherein at least one ring is configured to allow rotation of the sensor it carries about the axis of the tubular structure.

3. The system according to claim 1 or 2, wherein at least one ring is configured to allow translation of the sensor relative to the axis of the tubular structure.

4. The system according to claim 1, further comprising a plurality of EMAT electromagnetic transducers arranged in a line (213) and substantially parallel to the axis of the tubular structure to be analyzed.

5. The system according to any of the preceding claims, wherein an arrangement (rings, sensors) is permanently installed around the tubular structure.

6. The system according to any of the preceding claims, wherein a ring carrying one or more sensors is articulated, in that it has interconnected circular or linear segments, so as to be able to conform to bent parts and/or sections of variable diameter of the tubular structure, internal or external.

7. The system according to claim 1, wherein the computing and memory resources are configured to determine a function representative of the impulse response by cross-correlation.

8. The system according to claim 1, wherein the computing and memory resources are configured to determine a function representative of the impulse response by passive inverse filtering.

9. The system according to claim 1, wherein the computing and memory resources are configured to determine a function representative of the impulse response by C3 correlation coda correlation.

10. The system according to any of the preceding claims, wherein the liftoff distance between an EMAT sensor and the tubular structure is adaptive or adapted, in particular as a function of the obtained image and/or signal processing, for example the convergence rate toward the Green's function.

11. A method for analyzing a tubular structure (100), wherein at least two electromagnetic transducers EMAT (121) and (122), referred to as sensors, are carried by at least two rings (110, 120) disposed around the tubular structure to be analyzed, and are located at a configurable distance, referred to as liftoff, from the tubular structure, the method comprising a step consisting of determining when to measure the ambient noise in the tubular structure and, using a passive mode analysis by correlation of the ambient field for at least one pair of sensors (121) and (122), from the measured acoustic elastic diffuse noise, a function representative of the impulse response of said tubular structure (100), using computational and memory resources accessed locally and/or remotely; said determination of the representative function of the impulse response for each pair of sensors being performed by cross-correlation and/or by passive inverse filtering and/or by correlation coda correlation.

12. The method according to claim 11, further comprising a step of bonding a conductive film to the tubular structure.

13. The method according to claim 11 or 12, further comprising a guided wave tomography step for imaging the tubular structure.

14. A computer program product, said computer program comprising code instructions that cause the system according to any one of claims 1 to 10 to perform the steps of the method of any one of claims 11 or 12, when said program is executed on a computer.

Figure 1

121
100
121
110
121
121

Figure 2

Figure 3

Figure 4

Figure 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2019091705 A
- FR 3073289 A1
- US 5456113 A

**Littérature non-brevet citée dans la description**

- Narrow-band hybrid pulsed laser/EMAT system for non-contact ultrasonic inspection using angled shear waves. Review of Progress in Quantitative Nondestructive Evaluation. Springer, 1995
- Passive guided waves measurements using fiber Bragg gratings sensors. *The Journal of the Acoustical Society of America*, 2018